**Europäisches Patentamt**

**European Patent Office**

**Office européen des brevets**

(11) Veröffentlichungsnummer: **0 111 571**
**A1**

(12) **EUROPÄISCHE PATENTANMELDUNG**

(21) Anmeldenummer: **82111492.3**

(22) Anmeldetag: **10.12.82**

(51) Int. Cl.³: **B 23 Q 7/14**
**B 23 Q 41/02, B 65 G 35/00**
**F 16 H 19/00**

(43) Veröffentlichungstag der Anmeldung:
**27.06.84** Patentblatt **84/26**

(84) Benannte Vertragsstaaten:
**BE DE FR GB IT SE**

(71) Anmelder: **Liebherr-Verzahntechnik GmbH**
**Kaufbeurer Strasse 141**
**D-8960 Kempten(DE)**

(72) Erfinder: **Weiss, Raphael**
**Parkstrasse 55**
**D-8960 Kempten(DE)**

(74) Vertreter: **Kador . Klunker . Schmitt-Nilson . Hirsch**
**Corneliusstrasse 15**
**D-8000 München 5(DE)**

(54) **Transporteinrichtung.**

(57) Eine Transporteinrichtung mit einer Transportschiene, einer auf dieser angeordneten Transportgut-Aufnahme, einem endlosen Zugmittel, das an der Transportgut-Aufnahme befestigt ist, und mit einem reversierbaren Zugmittelantrieb, durch den die Transportgut-Aufnahme zwischen wenigstens zwei Stationen hin- und herbewegbar ist, wird zur konstruktiven Vereinfachung und funktionellen Verbesserung derart ausgebildet, daß als Zugmittel ein Flachriemen (20) vorgesehen ist und die Transportgut-Aufnahme (14) eine umlenkende Führung (22-24) für den Flachriemen (20) aufweist, über die der Flachriemen (20) reibschlüssig an der Transportgut-Aufnahme (14) befestigt ist. Die in der umlenkenden Führung (22-24) auftretende Haftreibung ist über die Spannung des Flachriemens (20) derart einstellbar, daß sie nur bei Erreichen der vorgesehenen Station überwunden wird.

FIG. 2

Die Erfindung betrifft eine Transporteinrichtung der im Oberbegriff des Anspruches 1 genannten Gattung.

Derartige Transporteinrichtungen dienen dazu, Fertigungseinrichtungen für Werkstücke miteinander zu verketten. Dabei kann die Transportschiene, auf der das Transportgut befördert wird, horizontal, schräg oder vertikal mit geradliniger Bewegungsbahn angeordnet sein. Für den Einsatz in einer selbsttätig arbeitenden Fertigungslinie muß beispielsweise eine vertikal arbeitende Transporteinrichtung (Elevator) in der Lage sein, Werkstücke mit einem bestimmten, unter Umständen unterschiedlichem Gewicht lagegenau aufzunehmen, mit sanftem Anfahren anzuheben und sicher in die vorgegebene Zielposition bzw. Positionen zu bringen, wobei dort die Stellung der Transportgut-Aufnahme in geeigneter Weise solange positionsgenau gehalten werden muß, bis das Werkstück die Transportgut-Aufnahme verlassen hat. Gattungsmäßig bekannte Transporteinrichtungen weisen als endloses Zugmittel eine Kette auf, die über zwei Umlenkrollen geführt ist, wobei eine der Umlenkrollen durch einen polumschaltbaren Motor angetrieben wird. Die Transportgut-Aufnahme ist als Schlitten ausgebildet, der an der Kette befestigt ist. Sobald sich der Schlitten der Zielposition nähert, wird die Drehzahl des Motors durch einen im Bereich der Zielposition vorgesehenen Vorschalter reduziert. Der Schlitten wird hierdurch abgebremst und erreicht dann die vorgesehene Station. Hier wird die Schlittenposition durch Klemmen oder Indexieren gehalten, wobei hierfür bei weiterlaufendem Motor eine Rutschkupplung oder bei völlig ausgeschaltetem Motor eine steuerbare Rast- oder Bremseinrichtung vorgesehen sind. Zur Rückwärtsbewegung der Transportgut-Aufnahme wird die Motordrehrichtung umgeschaltet und die vorgesehene Station in entsprechender Weise angefahren. Die bekannten Transporteinrichtungen benötigen zahlreiche Steuer- und Halteelemente, die die Konstruktion recht aufwendig gestalten. Nachteilig ist ferner, daß ihre Funktion kompliziert abläuft und der Betrieb durch die zahlreichen, in ihrer Wirkungsweise miteinander zu koordinierenden Einzelelemente störanfällig ist und häufige Justierungen und Wartungen erforderlich sind.

Der Erfindung liegt die Aufgabe zugrunde, eine Transporteinrichtung der eingangs genannten Art konstruktiv zu vereinfachen und funktionell zu verbessern.

Erfindungsgemäß sind zur Lösung die im Anspruch 1 genannten Merkmale vorgesehen. Vorteilhafte und bevorzugte Merkmale, die den Erfindungsgegenstand weiterbilden, sind in den Unteransprüchen angegeben.

Demgemäß ist als endloses Zugmittel ein Flachriemen vorgesehen, der die gesamte Konstruktion wesentlich vereinfacht. Statt einer relativ schweren Kette, die über Zahnräder geführt und stets geschmiert werden muß, wird nunmehr ein leichtgewichtiger flexibler Flachriemen verwendet, zu dessen Führung nur einfach herzustellende Riemenscheiben erforderlich sind. In vorteilhafter Weise durchtritt dieser Flachriemen zur Befestigung an der Transportgut-Aufnahme eine umlenkende Führung an der Transportgut-Aufnahme derart, daß er reibschlüssig an dieser befestigt ist. Dieser Reibschluß wird durch die umlenkende Führung bewirkt, wobei diese derart auslegbar ist, daß das Gewicht der vorgesehenen Werkstücke gerade mit Sicherheit transportiert bzw. gehoben werden kann. Hierdurch ist es in günstiger Weise möglich, unter Ausnutzen des Schlupfes ein sanftes Anfahren und ein sicheres Halten an der vorgegebenen Zielposition ohne zusätzliche Steuer- und Schalteinrichtungen zu erreichen. Durch den Reibschluß im Bereich der umlenkenden Führung kann der Motor auch nach Erreichen der vorgesehenen Zielposition weiterlaufen und macht dadurch ein zusätzliches Klemmen oder Indexieren zum Halten der Transportgut-Aufnahme überflüssig. Der vorgesehene Flachriemen benötigt keine zusätzliche Wartung und ist sehr robust. Er kann auch unter schwierigsten Bedingungen, z.B. bei Ölverschmutzung, zuverlässig arbeiten. Das Verschleißverhalten des Flachriemens ist hervorragend, da durch den vorgesehenen Schlupf nicht ständig eine Stelle belastet wird. Hierdurch wird die Störanfälligkeit der Transporteinrichtung wesentlich verringert. Die Transporteinrichtung kann aber auch erheblich schneller mit der erforderlichen Sicherheit arbeiten als die herkömmlichen, gattungsmäßigen Transporteinrichtungen.

Die umlenkende Führung für den Flachriemen kann mit allen geeigneten Umlenkelementen erfolgen, die eine Aufnahme für den Flachriemen aufweisen. Wenn die umlenkende Führung mit wenigstens zwei Riemenscheiben gebildet ist, von denen wenigstens eine drehfest ist, kann die reibschlüssige Befestigung des Flachriemens an der Transportgut-Aufnahme besonders einfach und wirkungsvoll vorgenommen werden, wobei es für das Verschleißverhalten des Flachriemens von Vorteil ist, wenn nur eine der Riemenscheiben drehfest ist, und der Durchmesser und die Breite der Riemenscheiben derart gewählt sind, daß nur ein begrenztes Walken des Flachriemens stattfindet und die sich aus der Spannung des Flachriemens ergebende Druckkräfte über eine möglichst große Fläche verteilt werden.

Die Haftreibung des Flachriemens an der bzw. den festen Riemenscheiben ist vorzugsweise einstellbar, um die Transporteinrichtung an unterschiedliche Transportgutgewichte anpassen zu können. Dieses Einstellen der Haftreibung kann beispielsweise durch eine im Bereich der Führung angeordnete Druckrolle erfolgen. Erheblich einfacher und günstiger ist es jedoch, wenn die Haftreibung über die Spannung des Flachriemens einstellbar ist, wobei der Flachriemen vorzugsweise mit einem einstellbaren federbelasteten Zugglied spannbar ist. Hierdurch wird eine problemlose Regulierung der Riemenspannung ermöglicht, durch die der Flachriemen stets
in der gewünschten Spannung gehalten und damit der
Reibschluß beim Transport mit Sicherheit gewährleistet
ist.

Der Flachriemen kann an der festen Riemenscheibe um
ca. 180° umgelenkt sein. Wenn eine Umlenkung um mehr
als 180° vorgesehen ist, wird die Flächenpressung auf
den Flachriemen verringert und die umlenkende Führung
kann besonders kompakt ausgebildet werden, weil dann
die zweite Riemenscheibe, die drehbar oder drehfest
ist, nahezu achsparallel zu der festen Riemenscheibe
angeordnet werden kann.

Um die Transportgut-Aufnahme in der vorgesehenen Zielstation sicher zu halten, ist im Bereich jeder Station
ein Anschlag vorgesehen, der justierbar ist und dem
ein stoßdämpfendes Element vorzugsweise an der Transportgut-Aufnahme zugeordnet ist. Hierdurch kann die
Transporteinrichtung die Transportgut-Aufnahme ohne
zusätzliche Klemm- oder Indexiereinrichtungen sicher
an der vorgesehenen Zielstation halten, solange der
Zugmittelantrieb die Transportgut-Aufnahme unter Schlupf
gegen den Anschlag drückt. Durch den Anschlag wird die
für den Transport benötigte Haftreibung überwunden,
und der Flachriemen rutscht solange durch die Führung,
bis der Antrieb abgestellt oder reversiert wird.
Hierdurch ist es möglich, mit einfachen Anschlägen,
die gegebenenfalls in die Bewegungsbahn der Transportgut-Aufnahme einfahrbar sind, verschiedene Stationen
anzufahren. Durch die Ausbildung als Festanschlag, der
justierbar und mit einem stoßdämpfenden Element, vorzugsweise an der Transportgut-Aufnahme, versehen ist,
wird der Einsatz von Bremsen sowie das exakte Abschalten des Antriebsmotors überflüssig. Die Genauigkeit, mit der eine vorbestimmte Position angefahren
werden kann, hängt nicht mehr von dem Verschleiß von Bremsbelägen und einer aufwendigen Motorsteuerung ab. Hinzu kommt, daß die Längung der Kette, die die Anfahrgenauigkeit beeinflußt, hier kein Problem darstellt, da durch das vorgesehene Zugglied selbständig die Nachspannung des Flachriemens erfolgt.

Der für die Transporteinrichtung erfindungsgemäß vorgesehene Flachriemen muß aus verschleißfestem Material bestehen. Vorzugsweise ist ein Textilriemen vorgesehen, der einen ruhigen gleichmäßigen Lauf der Transporteinrichtung gewährleistet und Schwingungen dämpft. Der reversierbare Antrieb des Flachriemens wird vorzugsweise von einem normalen Getriebemotor vorgenommen, dessen Steuerung insbesondere bei selbsttätig arbeitenden Fertigungslinien besonders einfach erfolgen kann.

Wenn weiterhin vorgesehen ist, daß von wenigstens einer drehbaren Riemenscheibe der umlenkenden Führung ein Antrieb für zusätzliche Vorrichtungen ableitbar ist, kann nach Anfahren der vorgesehenen Station die beim Schlupf auftretende Drehung der drehbaren Riemenscheibe für zusätzliche Antriebe, beispielsweise zur Betätigung einer Einrichtung, die das Werkstück aus der Transportgut-Aufnhme entfernt verwendet werden.

Weitere Merkmale, Einzelheiten und Vorteile der Erfindung sind auch in dem anschließenden Beschreibungsteil enthalten. Ein Ausführungsbeispiel der Erfindung wird nachfolgend unter Bezugnahme auf die beigefügten Zeichnungen näher erläutert. Es zeigen:

Fig. 1   die Vorderansicht auf eine als Elevator aus- gebildete erfindungsgemäße Transportein- richtung; und

Fig. 2   eine vergrößerte Seitenansicht des Elevators, wobei sich die Transportgut-Aufnahme an der oberen Station befindet und der mittlere Bereich des Elevators weggeschnitten ist.

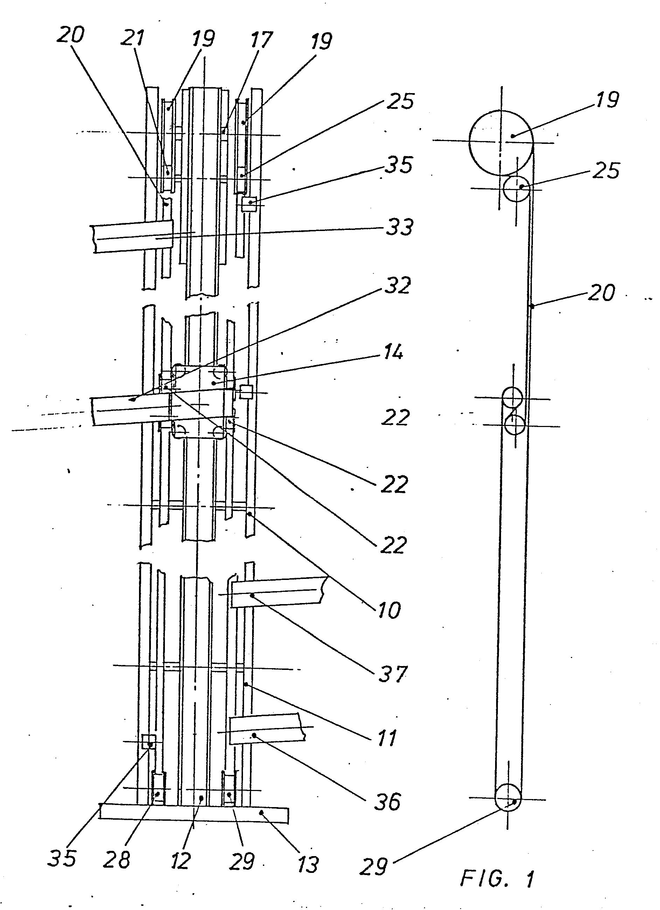

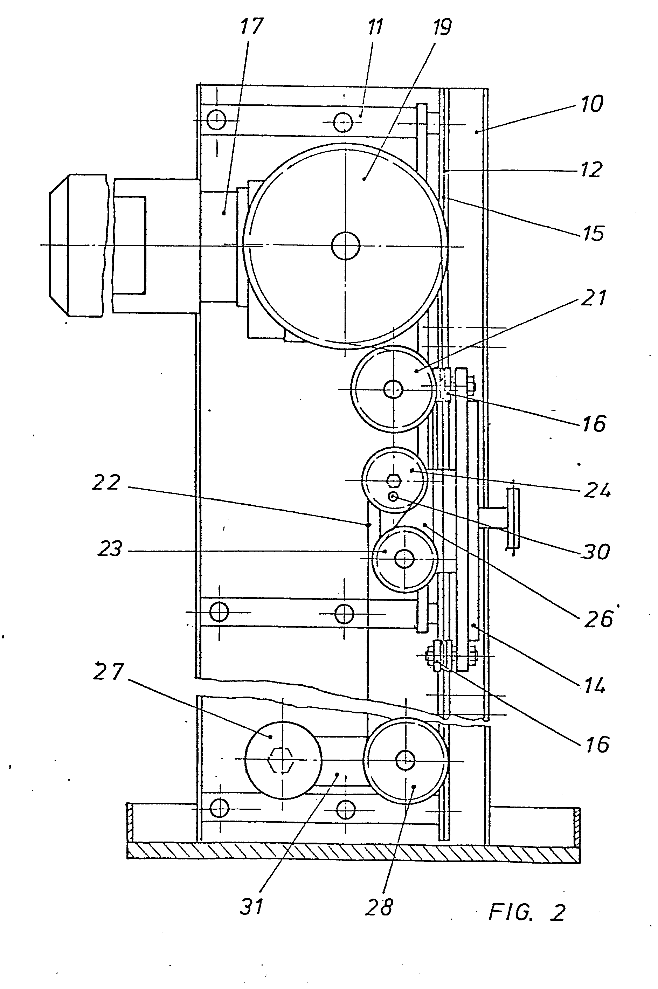

Die erfindungsgemäße Transporteinrichtung ist in den beiden Figuren als Elevator 10 ausgebildet. Der Elevator 10 besteht aus einem Rahmengestell 11, in dem, wie in Fig. 1 dargestellt, mittig die vertikale Transportschiene 12 befestigt ist. Das Rahmengestell 11 weist an seinem unteren Ende einen Sockel 13 auf. Auf der Transportschiene 12 ist die Transportgut-Aufnahme 14 verschiebbar angeordnet. Wie aus Fig. 2 zu entnehmen ist, sind an beiden Seiten der Transportschiene 12 Lagerschneiden 15 gebildet, auf denen Führungsrollen 16 laufen, die eine entsprechend ausgebildete Nut aufweisen und seitlich an der Transportgut-Aufnahme 14 lose drehbar befestigt sind.

Am oberen Ende des Rahmengestells 11 ist der Motor 17 angebracht, von dem in beiden Figuren nur die großen Riemenscheiben 18 und 19 zu sehen sind, die die Flachriemen 20 antreiben.

Der dargestellte Elevator 10 besitzt insgesamt zwei Flachriemen 20, die in Fig. 1 zur Vereinfachung weggelassen worden sind. Durch das Vorsehen von zwei Flachriemen kann in vorteilhafter Weise die Belastung des Zugmittels auf zwei dünner und schwächer ausbildbare Flachriemen verteilt werden.

Beide Flachriemen 20 bestehen aus einem Textilriemen und durchlaufen kongruente Bewegungsbahnen. Wie im Zusammenhang mit Fig. 2 zu entnehmen ist, läuft der in Fig. 1 links vorgesehene Flachriemen 20 über die angetriebene Riemenscheibe 19 und die Umlenkrolle 21 über die umlenkende Führung 22 zu der Umlenkrolle 28, von der der Flachriemen 20 direkt zu der angetriebenen Riemenscheibe 19 zurückkehrt. In gleicher Weise läuft der rechte Flachriemen 20 von der angetriebenen Riemenscheibe 18 über die Umlenkrolle 25, die rechte umlenkende Führung 22 zu der Umlenkrolle 29 und von dieser dann direkt zu der angetriebenen Riemenscheibe 18 zurück. Die Flachriemen 20 werden dabei an den entsprechenden Riemenscheiben und Umlenkrollen zwischen randseitig vorgesehenen Vorsprüngen geführt.

Die umlenkenden Führungen 22 sind an beiden Seiten der Transportgut-Aufnahme 14 an Trägern 26 befestigt, die sich beiderseits der Transportschiene 12 rechtwinklig zu dieser, wie in Fig. 2 dargestellt, nach hinten erstrecken. Die umlenkende Führung 22 ist mit der drehbar befestigten Riemenscheibe 23 und der festen Riemenscheibe 24 gebildet. Die feste Riemenscheibe 24 ist zusätzlich über einen Paßstift 30 an dem Träger 26 befestigt.

Die Rotationsachse der drehbaren Riemenscheibe 23 ist gegenüber der entsprechenden Achse der festen Riemenscheibe 24 nur geringfügig versetzt. Hierdurch kann die umlenkende Führung 22 besonders kompakt ausgebildet werden und es wird gleichzeitig gewährleistet, daß der Flachriemen 20 sowohl an der festen Riemenscheibe 24 als auch an der drehbaren Riemenscheibe 23 um mehr als 180° umgelenkt ist.

Die an der festen Riemenscheibe 24 auftretende Haftreibung ist über die Spannung des Flachriemens 20 einstellbar. Hierfür sind die unteren Umlenkrollen 28 bzw. 29 jeweils oder auch gemeinsam an einem Zugglied 27 angelenkt, das in Fig. 2 nur durch einen Kreis und einen zu der Umlenkrolle 28 führenden Hebel 31 dargestellt ist. Die Umlenkrollen 28 und 29 bilden somit Spannrollen, über die die Spannung der Flachriemen 20 einzeln oder gemeinsam durch Einstellen der Federlast hinsichtlich der erforderlichen Haftreibung für das jeweilige Transportgut reguliert werden können. Außerdem sorgen die Zugglieder 27 in vorteilhafter Weise dafür, daß auftretende Dehnungen der Flachriemen durch selbständige Nachspannung sofort verschwinden.

In Fig. 1 sind im oberen Bereich des Rahmengestells 11 eine Station 32 und eine Station 33 schematisch angedeutet. Über die Station 32 bzw. 33 kann das Transportgut, das bei der Transportgut-Aufnahme 14 vertikal befördert worden ist, schräg aus dem Elevator 10 herauslaufen. Hierzu ist auch an der Transportgut-Aufnahme 14 das Halten des Transportgutes in einer entsprechenden Schräge vorgesehen, die nach Erreichen der vorbestimmten Station eine Trennung des Transportgutes von der Transportgut-Aufnahme erleichtert. Die Stationen 32 und 33 können mit weiteren Transportschienenanschlüssen gebildet sein, die in passender Weise auch an der Transportgut-Aufnahme 14 für rollendes Transportgut angeordnet sind.

Im Bereich der Station 33 ist ein Festanschlag 35 vorgesehen, der in nicht dargestellter Weise justierbar ist. Außerdem kann vorzugsweise an der Transportgut-Aufnahme ein stoßdämpfendes Element, beispielsweise in Form eines Gummipuffers oder eines hydraulischen Stoßdämpfers dem Anschlag 35 zugeordnet sein, um ein sanftes Anfahren der Zielstation zu gewährleisten. Ein in gleicher Weise ausgebildeter Festanschlag 35 ist auch an der im unteren Bereich des Rahmengestells 11 vorgesehenen Station 36 angeordnet. In dieser Station 36 kann über schräge Transportschienen heranlaufendes Transportgut auf die Transportgut-Aufnahme 14 aufgegeben werden.

Oberhalb der Station 36 befindet sich eine weitere Station 37, die ebenfalls als Aufgabestation für Transportgut dient. Damit die Transportgut-Aufnahme 14 auch an dieser Zwischenstation sicher und genau hält, kann in die Bewegungsbahn der Transportgut-Aufnahme 14 ein nicht dargestellter Festanschlag 35 eingeführt werden, der ebenfalls justierbar und dem stoßdämpfenden Element zugeordnet sein kann. Entsprechendes gilt für die oberhalb der Station 37 vorgesehene Station 32, die eine Zwischenstation für die Abgabe des Transportgutes bildet.

Die erfindungsgemäße, in diesem Ausführungsbeispiel als Elevator ausgebildete Transporteinrichtung arbeitet nun wie folgt. Wenn Transportgut von der Station 36 zu der Station 32 oder 33 gehoben werden soll, wird die Transportgut-Aufnahme 14 durch den Getriebemotor 17 zu der Station 36 an den hier vorgesehenen Anschlag 35 herabbewegt. Entsprechend dem Gewicht des anzuhebenden Transportgutes wird die Spannung der Flachriemen 20 über die federbelasteten Zugglieder 27 derart eingestellt, daß der Einfluß der in der umlenkenden Führung 22 auftretenden Haftreibung ausreicht, um das entsprechende Transportgut zu befördern. Hierdurch wird einerseits ein sanftes Anfahren erzielt, da beim Reversieren des Motors 17 zunächst in der umlenkenden Führung ein gewisser Schlupf auftritt, bis eine reibschlüssige Befestigung der Flachriemen 20 der Transportgut-Aufnahme 14 erfolgt. Sobald die Transportgut-Aufnahme 14 zur Anlage an den Anschlag 35 im Bereich der Station 33 gelangt, werden die Zugkräfte in den Flachriemen 20 so groß, daß sie die Haftreibung in den umlenkenden Führungen 22 überwinden und die Flachriemen 20 einfach durchrutschen. Da der Motor 17 die Flachriemen 20 weiterhin antreibt, wird die Transportgut-Aufnahme 14 gegen den Anschlag 33 so lange gehalten, bis der Motor 17 reversiert. Hierdurch ist an jeder Station ein sicheres Halten der angefahrenen Position gewährleistet, ohne daß zusätzlich Klemm- oder Indexiereinrichtungen erforderlich sind.

Die Rückwärtsbewegung der Transportgut-Aufnahme 14 von der Station 33 zu der Station 36 erfolgt in entsprechender Weise. Weiterhin kann Transportgut durch Einfahren eines entsprechenden Anschlages bei der Zwischenstation 37 aufgenommen sowie zusätzlich an der Zwischenstation 32 in entsprechender Weise abgegeben werden.

0111571

Sobald die Transportgut-Aufnahme 14 zur Anlage an einen Anschlag 35 gelangt, beginnen sich die freien Riemenscheiben 23 der umlenkenden Führungen 22 zu drehen. Diese Drehung kann in günstiger Weise für den Antrieb von zusätzlichen Vorrichtungen in nicht dargestellter Weise abgeleitet werden. So könnte beispielsweise eine Ausstoßvorrichtung für das Transportgut aus der Transportgut-Aufnahme 14 betätigt werden.

Die erfindungsgemäße Transporteinrichtung ist nicht nur in Form eines Elevators zum Heben geeignet, sondern kann universell für jegliche Art von Transporten eingesetzt werden. So können beispielsweise Querverschiebungen auf einer entsprechenden Schiene oder auch eine Kreisbewegung realisiert werden. Sie eignet sich gut in all den Fällen, in denen mehrere feste Positionen immer wieder angefahren werden müssen. In besonders günstiger Weise kann die Transporteinrichtung auch zusammen mit einem Ladeportal eingesetzt werden, das auf einer längeren Strecke mehrere Positionen hintereinander anfährt und Werkstücke an Fertigungseinrichtungen übergibt oder entnimmt und dann weiterfährt. Durch die erfindungsgemäßen Merkmale ist die Transporteinrichtung im Vergleich zu bisher bekannten Transporteinrichtungen konstruktiv wesentlich vereinfacht, da durch die vorgesehene Verwendung des Flachriemens und dessen reibschlüssiger Befestigung an der Transportgut-Aufnahme aufwendige Führungs- und Positioniermittel wegfallen und eine kompakte und leichtgewichtige Ausbildung ermöglicht wird. Hierdurch wird auch eine deutliche Verbesserung der Funktion der Transporteinrichtung erzielt, die sich nicht nur hinsichtlich günstigerer Verschleiß- und Wartungseigenschaften äußert, sondern ihren Ausdruck auch darin findet, daß nunmehr mit vergleichsweise höheren Transportgeschwindigkeiten Transportgut sicher und exakt befördert werden kann.

K 14 747

Liebherr-Verzahntechnik GmbH
Kaufbeurer Straße 141
8960  K e m p t e n

Transporteinrichtung

P a t e n t a n s p r ü c h e

1.    Transporteinrichtung mit einer Transportschiene, einer auf dieser geführten Transportgut-Aufnahme, einem endlosen Zugmittel, das an der Transportgut-Aufnahme befestigt ist und mit einem reversierbaren Zugmittelantrieb, durch den die Transportgut-Aufnahme zwischen wenigstens zwei Stationen hin- und herbewegbar ist, dadurch g e k e n n z e i c h n e t, daß als Zugmittel ein Flachriemen (20) vorgesehen ist, und die Transportgut-Aufnahme (14) eine Führung (22) für den Flachriemen (20) aufweist, mittels welcher der Flachriemen (20) reibschlüssig an der Transportgut-Aufnahme (14) befestigt ist.

2. Transporteinrichtung nach Anspruch 1, dadurch g e k e n n z e i c h n e t, daß die Führung (22) mit wenigstens zwei Riemenscheiben (23, 24) gebildet ist, von denen wenigstens eine (24) drehfest ist.

3. Transporteinrichtung nach Anspruch 2, dadurch g e k e n n z e i c h n e t, daß die an der festen Riemenscheibe (24) auftretende Haftreibung einstellbar ist.

4. Transporteinrichtung nach Anspruch 3, dadurch g e k e n n z e i c h n e t, daß die Haftreibung über die Spannung des Flachriemens (20) einstellbar ist.

5. Transporteinrichtung nach Anspruch 4, dadurch g e k e n n z e i c h n e t, daß der Flachriemen (20) mit einem einstellbaren federbelasteten Zugglied (27) spannbar ist.

6. Transporteinrichtung nach einem der vorangehenden Ansprüche, dadurch g e k e n n z e i c h n e t, daß der Flachriemen (20) wenigstens an der festen Riemenscheibe (24) um mehr als 180° umgelenkt ist.

7. Transporteinrichtung nach einem der vorangehenden Ansprüche, dadurch g e k e n n z e i c h n e t, daß der Flachriemen (20) für die vertikale Bewegung der Transportgut-Aufnahme (14) vorgesehen ist.

8. Transporteinrichtung nach einem der vorangehenden Ansprüche, dadurch g e k e n n z e i c h n e t, daß für die Transportgut-Aufnahme (14) im Bereich jeder Station (32, 33, 36, 37) ein Anschlag (35) vorgesehen ist.

9. Transporteinrichtung nach Anspruch 8, dadurch g e k e n n z e i c h n e t, daß der Anschlag (35) justierbar ist.

10.    Transporteinrichtung nach Anspruch 8 oder 9, dadurch g e k e n n z e i c h n e t, daß dem Anschlag (35) ein stoßdämpfendes Element an der Transportgut-Aufnahme (14) zugeordnet ist.

11.    Transporteinrichtung nach einem der vorangehenden Ansprüche, dadurch g e k e n n z e i c h n e t, daß von wenigstens einer drehbaren Riemenscheibe (23) der umlenkenden Führung (22) ein Antrieb für zusätzliche Vorrichtungen ableitbar ist.

12.    Transporteinrichtung nach einem der vorangehenden Ansprüche, dadurch g e k e n n z e i c h n e t, daß der Riemenschlupf so bemessen ist, daß der Riemen bei festgehaltener Transportgut-Aufnahme (14) weiter umläuft.

13.    Transporteinrichtung nach einem der vorangehenden Ansprüche, dadurch g e k e n n z e i c h n e t, daß der Flachriemen (20) von einem Getriebemotor (17) angetrieben wird.

Patentanmeldung 82111492.3
Liebherr-Verzahntechnik GmbH

Neuer Patentanspruch 1

1. Transporteinrichtung mit einer Transportschiene, einer auf dieser geführten Transportgut-Aufnahme, einem endlosen Zugmittel, das an der Transportgut-Aufnahme mittels einer Führung befestigt ist, und mit einem reversiebaren Zugmittelantrieb, durch den die Transportgut-Aufnahme zwischen wenigstens zwei Stationen hin- und herbewegbar ist, dadurch g e k e n n z e i c h n e t, daß als Zugmittel ein Flachriemen (20) vorgesehen ist, der mittels der Führung (20) reibschlüssig an der Transportgut-Aufnahme (14) befestigt ist.

FIG. 1

FIG. 2

**Europäisches Patentamt**

# EUROPÄISCHER RECHERCHENBERICHT

EP 82 11 1492

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,A | GB-A- 885 067 (BRITISH OXYGEN CO. LTD.) <br> * Seite 1, Zeilen 9-77; Figuren 1, 2 * | 1-3 | B 23 Q 7/14 <br> B 23 Q 41/02 <br> B 65 G 35/00 <br> F 16 H 19/00 |
| | --- | | |
| Y | Soviet Inventions Illustrated Week E 14, 19. Mai 1982 Setion M 23 & SU-A-837697 | 1 | |
| | --- | | |
| Y | Patent Abstracts of Japan Band 3, Nr. 39, 31. März 1979 Seite 77M54 & JP-A-54-15280 | 1 | |
| | --- | | |
| A | DE-B-1 756 438 (R. BOSCH GMBH) <br> * Spalte 3, Zeilen 44-64 * | 8 | |
| | ----- | | |

**RECHERCHIERTE SACHGEBIETE (Int. Cl. 3)**

B 23 Q 7/00
B 23 Q 41/00
B 65 G 17/00
B 65 G 35/00
B 65 G 37/00
F 16 H 19/00

Der vorliegende Recherchenbericht wurde für alle Patentansprüche erstellt.

| Recherchenort | Abschlußdatum der Recherche | Prüfer |
|---|---|---|
| BERLIN | 04-07-1983 | SIMON J J P |